**Europäisches Patentamt**

**European Patent Office**

**Office européen des brevets**

(19)

(11) Veröffentlichungsnummer: **0 036 998**
**B1**

(12)

# EUROPÄISCHE PATENTSCHRIFT

(45) Veröffentlichungstag der Patentschrift:
**19.06.85**

(51) Int. Cl.⁴: **F 02 C 3/30**

(21) Anmeldenummer: **81101938.9**

(22) Anmeldetag: **16.03.81**

(54) **Gasturbine mit durch Dampfeinspritzung verringerter Stickoxydemission.**

(30) Priorität: **28.03.80 DE 3012172**

(43) Veröffentlichungstag der Anmeldung:
**07.10.81 Patentblatt 81/40**

(45) Bekanntmachung des Hinweises auf die Patenterteilung:
**19.06.85 Patentblatt 85/25**

(84) Benannte Vertragsstaaten:
**CH DE FR GB LI SE**

(56) Entgegenhaltungen:
**DE - A - 2 321 379**
**DE - A - 2 832 368**
**DE - A - 2 837 714**
**US - A - 4 089 639**
**US - A - 4 110 973**

(73) Patentinhaber: **KRAFTWERK UNION
AKTIENGESELLSCHAFT, Wiesenstrasse 35,
D-4330 Mülheim (Ruhr) (DE)**

(72) Erfinder: **Maghon, Helmut, Dipl.-Math., Stockweg 61,
D-4330 Mülheim (Ruhr) (DE)**
Erfinder: **Becker, Bernard, Dr.Dipl.-Ing., Lothringer
Weg 2 N, D-4330 Mülheim (Ruhr) (DE)**

(74) Vertreter: **Mehl, Ernst, Dipl.-Ing. et al, Postfach 22 01 76,
D-8000 München 22 (DE)**

## Beschreibung

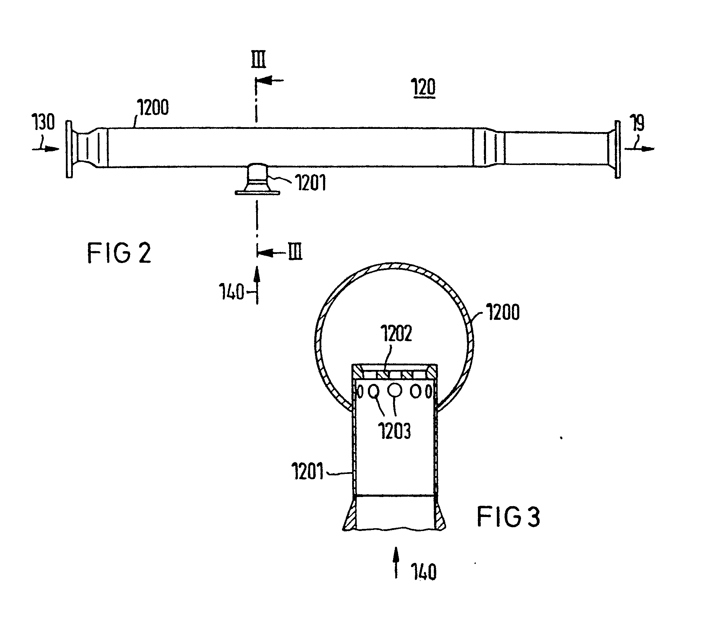

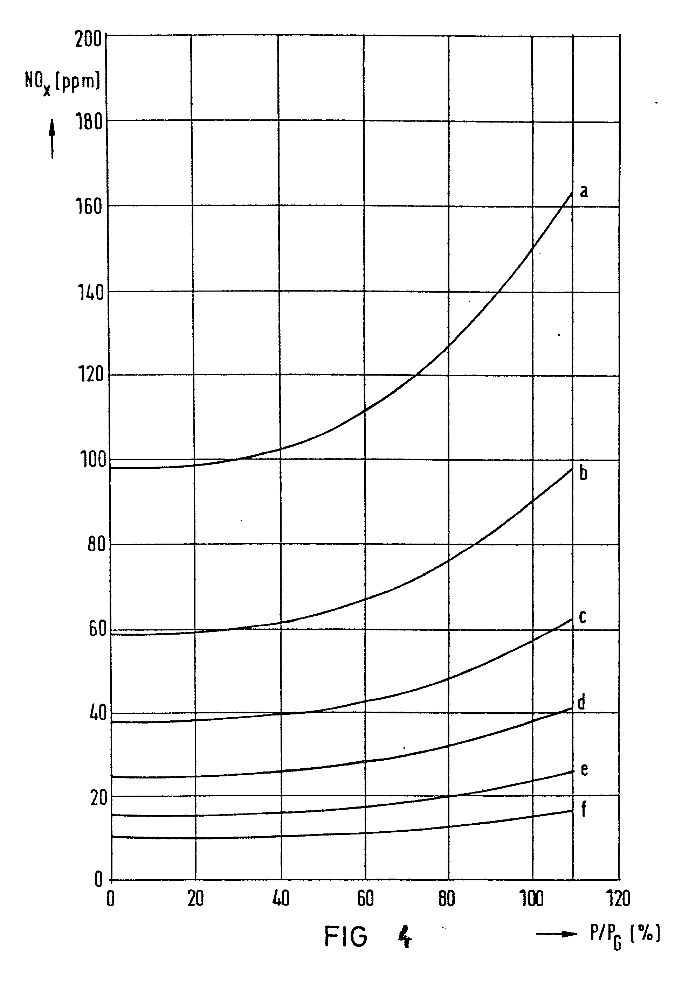

Die Erfindung bezieht sich auf eine Gasturbine mit mindestens einer Brennkammer, mindestens einem in die Brennkammer einmündenden Brenner, einer Brennstoffzuleitung für die Zufuhr eines gasförmigen Brennstoffes zum Brenner und mit einer Dampfzuleitung für die Zufuhr von Wasserdampf in die Brennkammer, wobei der Ausgang einer Mischeinrichtung zur Erzeugung eines Brennstoff-Wasserdampf-Gemisches über eine Gemischleitung in den Brenner mündet. Durch die US-A-4 089 639 ist es bekannt, den Ausgang einer Mischeinrichtung zur Erzeugung eines Brennstoff-Wasserdampf-Gemisches über eine Gemischleitung in den Brenner einer Verbrennungseinrichtung münden zu lassen, wobei letztere eine gattungsgemäße Gasturbine sein kann. Die Mischeinrichtung 54 (siehe Fig. 3 und 4) ist dabei als Wassereinspritz- bzw. Injektor-Einrichtung ausgeführt. Die Vermischung und Verdampfung des eingespritzten Wassers soll innerhalb einer turbulenten Strömung mit dem durch eine andere Leitung der Mischeinrichtung zugeführten heißen Brennstoff erfolgen. Der Mischeinrichtung 54 ist ein Vormischer mit einem Wasserbad vorgeschaltet, durch welchen das vorgeheizte Brenngas von unten nach oben strömt. Ein Bypaß mit Steuerventil führt einer stromab der Mischeinrichtung angeordneten Stelle der Gemischleitung mehr oder weniger reines heißes Brenngas zu, um die Temperatur und den Wasserdampfgehalt des Gemisches zu regulieren. Die Brennstoff-Wasserdampf-Gemisch-Erzeugung unmittelbar an der Brennkammer erfordert so eine Mehrzahl von Apparaten, Ventilen und anderen regelungstechnischen Elementen. Demgegenüber geht die vorliegende Erfindung davon aus, daß bei einer stationären Gasturbinenanlage eine Dampfschiene vorhanden ist. Unter Ausnutzung einer solchen soll die Vermischung des Wasserdampfes mit dem gasförmigen Brennstoff besonders innig sein. Der Erfindung liegt mithin die allgemeine Ausgabe zugrunde, eine Gasturbine mit einer im Hinblick auf die Verminderung der Stickoxydemission verbesserten Dampfeinspritzung zu schaffen und im besonderen die Aufgabe, unter Zugrundelegung einer Wasserdampfeinspritzung eine besonders innige Durchmischung zwischen Brennstoff und Wasserdampf herbeizuführen.

Diese Aufgabe wird bei einer Gasturbine der eingangs definierten Art erfindungsgemäß durch die im Kennzeichen des Anspruchs 1 angegebenen Merkmale dadurch gelöst, daß außer der Brennstoffzuleitung eine Dampfzuleitung in die Mischeinrichtung einmündet, daß die Mischeinrichtung ein an die Brennstoffzuleitung anschließendes und mit einem Abzweig für den Anschluß der Dampfzuleitung versehenes Mischrohr ist, daß der Abzweig in das Mischrohr hineinragt und nach innen mit einer Siebplatte abschließt und daß der in das Mischrohr ragende Teil des Abzweigs mehrere radiale Dampfauslaßöffnungen aufweist.

Eine vorteilhafte Weiterbildung des Gegenstandes nach Anspruch 1 besteht darin, daß in der Dampfzuleitung vor der Einmündung in der Mischeinrichtung eine Rückschlagklappe angeordnet ist.

Die mit der Erfindung erzielbaren Vorteile sind vor allem darin zu sehen, daß in der Mischeinrichtung Brennstoff und Dampf intensiv miteinander vermengt werden, so daß durch den Düsenaustritt des Brenners ein homogenes Brennstoff-Dampf-Gemisch in die Brennkammer gelangt. Für die Zufuhr von Wasserdampf in die Brennkammer ist nur ein geringer baulicher Aufwand an der Brennkammer erforderlich. Die gemäß den Ansprüchen 1 oder 2 ausgebildeten Mischeinrichtungen können unter Verwendung üblicher Rohrleitungsteile mit geringem Aufwand hergestellt werden; sie ergeben eine sehr feine Verteilung des Dampfes und Vermischung von Brennstoff und Dampf.

Der Gegenstand des Anspruchs 2 hat den Vorteil, daß auch bei einer eventuellen Unterbrechung der Dampfzufuhr kein Brennstoff in den Dampferzeuger strömen kann.

Mischeinrichtungen unter Verwendung von sogenannten T-Stücken sind im Gasturbinenbau bekannt. So durch die DE-A-2 832 368 und durch die US-A-4 110 973, sie arbeiten jedoch mit Wassereinspritzung und nicht mit Dampfstrahlen.

Ein Dampf-Injektionssystem für Gasturbinen ist zwar durch die DE-A-2 321 379 bekannt, jedoch wird dabei der Dampf in die Verbrennungsluft eingespritzt, wobei ein Teil des Dampfes auch direkt in die Verbrennungszone gelangen kann. Dabei nimmt also das Verbrennungsluft-Dampf-Gemisch nicht in seiner Gesamtheit an der Verbrennung teil, so daß der Umfang der $NO_x$-Reduzierung von Hause aus begrenzt ist.

Anhand einer vereinfachten schematischen Zeichnung sind Aufbau und Wirkungsweise eines Ausführungsbeispiels nach der Erfindung näher erläutert. Dabei zeigt:

Fig. 1 einen Schnitt durch eine Gasturbine mit einer dem Brenner vorgeschalteten Mischeinrichtung zur Erzeugung eines Brennstoff-Dampf-Gemisches,

Fig. 2 eine erste Ausführungsform der Mischeinrichtung,

Fig. 3 einen Schnitt gemäß der Linie III-III der Fig. 2,

Fig. 4 ein Schaubild in welchem die Abhängigkeit der Stickoxydemission vom Lastzustand der Gasturbine für verschiedene Mischungsverhältnisse des Brennstoff-Dampf-Gemisches aufgezeigt ist.

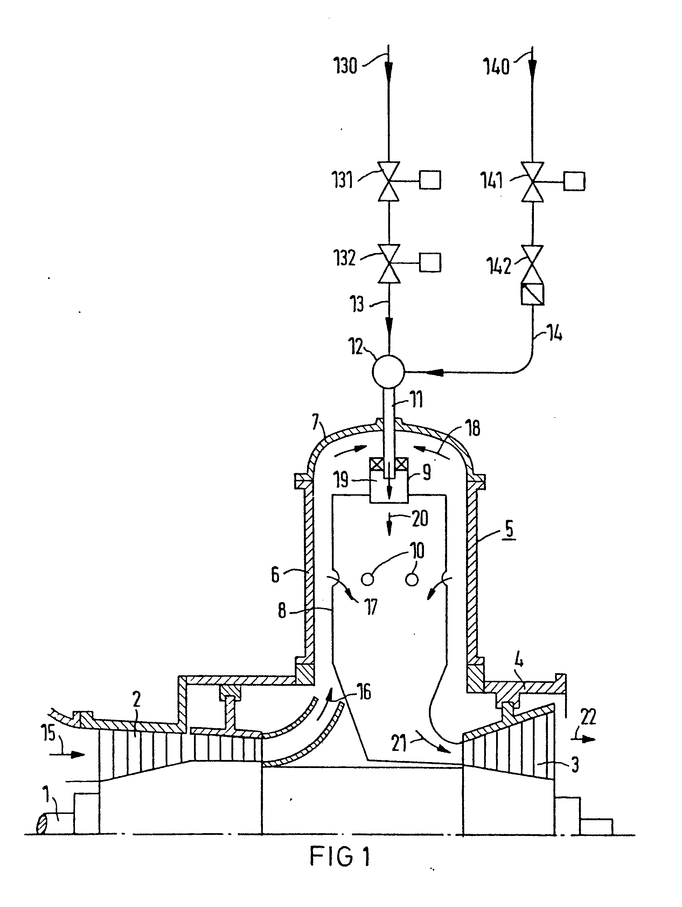

Bei der in Fig. 1 halbseitig dargestellten Gasturbine sind auf einer gemeinsamen Welle 1 ein Verdichter 2 und eine Turbine 3 angeordnet und von einem gemeinsamen Gehäuse 4 umgeben. Im Bereich zwischen dem Verdichter 2 und der Turbine 3 ist an das Gehäuse 4 eine Brennkammer 5 angeflanscht. Die Brennkammer 5 besitzt ein zylindrisches Brennkammergehäuse 6, welches an seinem äußeren stirnseitigen Ende mit einer Abschlußhaube 7 versehen ist. Koaxial innerhalb des Brennkammergehäuses 6 ist ein Flammrohr 8 angeordnet, in dessen äußeren stirnseitigen Bereich ein Brenner 9 einmündet und in dessen mittleren Bereich Mischluftöffnungen 10 eingebracht sind.

Der Brenner 9 ist über eine Gemischleitung 11 an eine Mischeinrichtung 12 angeschlossen, in welche eine Brennstoffzuleitung 13 und eine Dampfzuleitung 14 einmünden. Über die Brennstoffzuleitung 13 wird ein gasförmiger Brennstoff 130, wie z. B. Erdgas, in die Mischeinrichtung 12 eingeleitet, wobei die Zufuhr durch ein Schnellschlußventil 131 unterbrochen und durch ein Brennstoffregelventil 132 geregelt werden kann. Über die Dampfzuleitung 14 wird Wasserdampf 140 in die Mischeinrichtung 12 eingeleitet, wobei die Zufuhr durch ein Dampfregelventil 141 geregelt werden kann und wobei durch eine Rückschlagklappe 142 verhindert wird, daß bei einer Unterbrechung der Dampfzufuhr gasförmiger Brennstoff 130 in den an die Dampfzuleitung 14 angeschlossenen Dampferzeuger gelangen kann.

Beim Betrieb der vorstehend beschriebenen Gasturbine wird Außenluft 15 vom Verdichter 2 angesaugt und als verdichtete Verbrennungs- und Mischluft 16 in den zwischen Brennkammergehäuse 6 und Flammrohr 8 gebildeten Ringraum eingeleitet. Die von diesem Luftstrom abgezweigte Mischluft 17 strömt dann über die Mischluftöffnungen 10 in die Mischzone des Flammrohres 8, während der verbleibende Teil des Luftstromes als Verbrennungsluft 18 dem Brenner 9 zugeführt wird. Andererseits wird ein in der Mischeinrichtung 12 aus gasförmigem Brennstoff 130 und Wasserdampf 140 gebildetes homogenes Brennstoff-Dampf-Gemisch 19 durch den Düsenaustritt des Brenners 9 geleitet, so daß in die Verbrennungszone ein aus gasförmigem Brennstoff 130, Wasserdampf 140 und Verbrennungsluft 18 bestehendes Gemisch 20 gelangt. Bei dem Verbrennungsvorgang in dem Flammrohr 8 wird dann durch die unmittelbare Präsenz des Wasserdampfes 140 die Bildung von Stickoxyden weitgehend verhindert. Die heißen Verbrennungsgase, in welchen der Wasserdampf 140 enthalten ist, werden zusammen mit der Mischluft 6 der Turbine 3 zugeführt, wie es durch einen Pfeil 21 angedeutet ist. Die Abgase, welche die Turbine 3 verlassen, sind durch einen Pfeil 22 angedeutet.

Die Fig. 2 und 3 zeigen eine Ausführungsform der in Fig. 1 schematisch dargestellten Mischeinrichtung 12. Diese insgesamt mit 120 bezeichnete Mischeinrichtung besteht aus einem Mischrohr 1200, welches mit einem Abzweig 1201 versehen ist. Dieser Abzweig 1201 ragt in das Mischrohr 1200 hinein und schließt nach innen mit einer Siebplatte 1202 ab. Der in das Mischrohr 1200 ragende Teil des Abzweigs 1201 ist außerdem mit mehreren radialen Dampfaustrittsöffnungen 1203 versehen. Der gasförmige Brennstoff 130 wird direkt in das Mischrohr 1200 eingeleitet, während der Wasserdampf 140 über den Abzweig 1201 zugeführt wird und über die Öffnungen der Siebplatte 1202 und die radialen Dampfaustrittsöffnungen 1203 in verteilter Form in den gasförmigen Brennstoff 130 eingedüst wird. Hierbei bildet sich eine Mischung aus gasförmigem Brennstoff 130 und Wasserdampf 140, welche in dem stromabwärts vom Abzweig 1201 liegenden Bereich des Mischrohres 1200 weiter homogenisiert wird, so daß aus der Mischeinrichtung 120 ein homogenes Brennstoff-Dampf-Gemisch 19 austritt.

In dem Schaubild nach Fig. 4 ist auf der Ordinatenachse der im Abgaskanal weit hinter der Gasturbine nach einer vollständigen Mischung der Abgase 22 (Fig. 1) gemessene Gehalt an Stickoxyden $NO_x$ aufgetragen. Auf der Abszissenachse ist die auf die Grundlastleistung $P_G$ bezogene Leistung P der Gasturbine aufgetragen. Die Kurven a bis f zeigen die Abhängigkeit der auf 15 Vol.-% $O_2$ bezogenen $NO_x$-Emission von der Leistung P bei verschiedenen Mischungsverhältnissen des Brennstoff-Dampf-Gemisches 19 (Fig. 1). Das Verhältnis des Dampfmassenstromes $\dot{m}_D$ zum Brennstoffmassenstrom $\dot{m}_B$ ist bei der Kurve a: $\dot{m}_D/\dot{m}_E = 0$, bei der Kurve b: $\dot{m}_D/\dot{m}_B = 0,2$, bei der Kurve c: $\dot{m}_D/\dot{m}_B = 0,4$, bei der Kurve d: $\dot{m}_D/\dot{m}_B = 0,6$, bei der Kurve e: $\dot{m}_D/\dot{m}_B = 0,8$ und bei der Kurve f: $\dot{m}_D/\dot{m}_B = 1,0$. Die Kurve a zeigt also die hohe $NO_x$-Emission ohne die Zufuhr von Wasserdampf. Die durch die Zufuhr von Wasserdampf erzielte $NO_x$-Reduktion ist schon bei relativ kleinen Dampfmengen beachtlich und übertrifft die bisher erzielbaren Werte. Die Leistung der Turbine steigt durch die Zumischung von Wasserdampf zum Brennstoff wegen des erhöhten Turbinenmassenstromes max. um 4% an. Durch die Eindüsung von Wasserdampf in den Brennstoff kann also neben einer beachtlichen $NO_x$-Reduktion auch ein erheblicher Leistungsgewinn erzielt werden. Dabei ist es besonders wirtschaftlich, wenn für die Erzeugung des Wasserdampfes die Wärme der heißen Abgase der Gasturbine in Abgaswärmetauschern ausgenutzt wird.

**Patentansprüche**

1. Gasturbine mit mindestens einer Brennkammer (5), mindestens einem in die Brennkammer (5) einmündenden Brenner (9), einer Brennstoffzuleitung (13) für die Zufuhr eines gasförmigen Brennstoffes zum Brenner (9) und mit einer Dampfzuleitung (14) für die Zufuhr von Wasserdampf in die Brennkammer (5), wobei der Ausgang einer Mischeinrichtung (12) zur Erzeugung eines Brennstoff-Wasserdampf-Gemisches über eine Gemischleitung (11) in den Brenner (9) mündet, dadurch gekennzeichnet, daß außer der Brennstoffzuleitung (13) eine Dampfzuleitung (14) in die Mischeinrichtung (12, 120) einmündet, daß die Mischeinrichtung (120) ein an die Brennstoffzuleitung (13) anschließendes und mit einem Abzweig (1201) für den Anschluß der Dampfzuleitung (14) versehenes Mischrohr (1200) ist, daß der Abzweig (1201) in das Mischrohr (1200) hineinragt und nach innen mit einer Siebplatte (1202) abschließt und daß der in das Mischrohr (1200) ragende Teil des Abzweiges (1201) mehrere radiale Dampfaustrittsöffnungen (1203) aufweist.

2. Gasturbine nach Anspruch 1, dadurch gekennzeichnet daß in der Dampfzuleitung (14) vor der Einmündung in die Mischeinrichtung (12) eine Rückschlagklappe (142) angeordnet ist.

## Claims

1. A gas turbine having at least one combustion chamber (5), at least one burner (9) which opens into the combustion chamber (5), a fuel supply line (13) for the supply of a gaseous fuel to the burner (9) and a steam supply line (14) for the supply of steam to the combustion chamber (5), wherein the outlet of a mixing device (12) for producing a mixture of fuel and steam opens into the burner (9) through a mixing line (11), characterised in that, in addition to the fuel supply line (13), a steam supply line (14) opens into the mixing device (12, 120); that the mixing device (120) is a mixing tube (1200) which is connected to the fuel supply line (13) and is provided with a branch line (1201) for the connection of the steam supply line (14); that the branch line (1201) projects into the mixing tube (1200) and terminates towards the inside through a filter plate (1202); and that the part of the branch line (1201) which projects into the mixing tube (1200) has a plurality of radial steam outlet openings (1203).

2. A gas turbine as claimed in Claim 1, characterised in that a non-return valve (142) is arranged in the steam supply line (14) upstream of the opening into the mixing device (12).

## Revendications

1. Turbine à gaz comprenant au moins une chambre de combustion (5), au moins un brûleur (9) débouchant dans la chambre de combustion (5), un conduit d'admission de combustible (13) pour l'envoi d'un combustible gazeux au brûleur (9) et un conduit d'admission de vapeur (14) pour l'envoi de vapeur d'eau à la chambre de combustion (5), la sortie d'un dispositif de mélange (12) destiné à la production d'un mélange de combustible et de vapeur d'eau débouchant dans le brûleur (9) par un conduit pour le mélange (11), caractérisée en ce qu'en plus du conduit d'admission du combustible (13), un conduit d'admission de vapeur (14) débouche dans le dispositif de mélange (12, 120), en ce que le dispositif de mélange (120) est un tube de mélange (1200) se raccordant au conduit d'admission du combustible (13) et est muni d'une dérivation (1201) pour le raccordement du conduit d'admission de la vapeur (14), en ce que la dérivation (1201) fait saillie dans le tube de mélange (1200) et ferme vers l'intérieur par une plaque perforée (1202) et en ce que la partie de la dérivation (1201), qui fait saillie dans le tube de mélange (1200), présente plusieurs orifices (1203) radiaux de sortie pour la vapeur.

2. Turbine à gaz selon la revendication 1, caractérisée en ce qu'un clapet anti-retour (142) est disposé dans le conduit d'admission de la vapeur (14), en amont de l'embouchure dans le dispositif de mélange (12).

FIG 1

FIG 2

FIG 3

FIG 4